# EUROPEAN PATENT SPECIFICATION

(11) **EP 2 869 702 B1**
(45) Date of publication and mention of the grant of the patent: **21.06.2017**
(21) Application number: 13732975.1
(22) Date of filing: 03.07.2013
(51) Int. Cl.: A23G 3/34, A23G 3/46, A23G 3/54, A23G 1/00, A23G 1/36, A23G 1/46, A23G 3/40, A23G 3/50

(54) **CONFECTIONERY PRODUCT COMPRISING AGGLOMERATED OIL POWDER**
SÜSSWARE MIT AGGLOMERIERTEM ÖLPULVER
PRODUIT DE CONFISERIE COMPORTANT DE LA POUDRE D'HUILE AGGLOMÉRÉE

(30) Priority: 03.07.2012 EP 12174851
(43) Date of publication of application: 13.05.2015
(73) Proprietor: Nestec S.A., 1800 Vevey (CH)
(72) Inventor: ALTHAUS, Tim Oliver, GB- York Y01 9XA (GB); DOPFER, Daniel Johannes, 86899 Landsberg a. Lech (DE); NIEDERREITER, Gerhard, CH-1073 Savigny (CH)
(74) Representative: Kirk, Martin John
(86) International application number: PCT/EP2013/064020
(87) International publication number: WO 2014/006084

(56) References cited:
- EP-A1- 1 836 897
- EP-A1- 1 925 211
- EP-A1- 2 191 730
- WO-A1-2012/089691
- WO-A2-93/19622
- JP-A- 2002 188 095
- US-A1- 2007 098 853
- DATABASE WPI Week 199930 Thomson Scientific, London, GB; AN 1999-347938 XP002691244, & CN 1 210 687 A (YILE BLACK MAIZE FOOD CO LTD NEIQIU COUN) 17 March 1999 (1999-03-17)
- SHIVAKUMAR K M; CHETANA R; YELLA REDDY S: "Preparation and properties of encapsulated fat powders containing speciality fat and omega/PUFA-rich oils", INTERNATIONAL JOURNAL OF FOOD PROPERTIES, vol. 15, no. 2, 3 February 2012 (2012-02-03), pages 412-425, XP009166625, ISSN: 1094-2912, DOI: 10.1080/10942912.2010.487966

## Description

### FIELD OF THE INVENTION

The present invention relates to confectionery products, more particularly to the use of oil powder for the preparation of confectionery products, to solid confectionery products comprising agglomerated oil powder and to processes for the preparation thereof.

### BACKGROUND OF THE INVENTION

Any discussion of the prior art throughout the specification should in no way be considered as an admission that such prior art is widely known or forms part of common general knowledge in the field.

Confectionery products, with milky fillings are widely appreciated. However fillings tend to be fat-based and have a nutritional profile high in total fat and high in saturated fats.

The type of fat used in such confectionery products governs the texture as well as other organoleptic properties of the product. In general confectionery fillings must provide a sufficiently firm texture to ensure shape stability of the product and to avoid substantial deformation of the shape of the product upon handling. It is also desirable that the filling should melt in the mouth and that it should only have minor fractions of solids that melt above the blood temperature to yield a creamy mouth feel. In order to impart the required textural and indulgent, creamy, sensorial properties to fat-based confectionery fillings, high SFA, solid type fats are used.

However, high fat consumption and in particular high consumption of saturated fatty acids (SFA) are widely considered to have negative health benefits.

Hydrogenation of oil is a commonly used technique to obtain solid type fats from liquid oils. Besides the resulting high SFA content, the presence of trans fatty acids in partially hydrogenated fats has become a severe health issue. Trans fatty acids are associated with cardiovascular diseases as well as with the risk of getting diabetes and some types of cancer such as breast cancer.

Hence it would be desirable to reduce or replace high SFA solid-type fats, or hydrogenated fats containing significant levels of trans fatty acids, by low SFA liquid oils. However, for persons skilled in the art it is evident that in most cases of solid confectionery products it is not possible to use a liquid oil instead of a solid fat. A difficulty in just increasing / replacing the solid fats with low SFA liquid oils is that this impacts on the physical properties such as the taste, texture and the overall appearance of the filling compositions (organoleptic parameters). Also the replacement of solid fats by low SFA liquid oils in the recipe can have a negative impact on processability, such as giving a much softer and stickier ingredient mixture, which can be unprocessable.

Conventional fat-based milk fillings have a nutritional profile high in SFA and a relatively low content of non-fat milk solids, e.g around 20% w/w. The structure of fat-continuous fillings requires a certain proportion of fat to fill the interstices between the solid particles of sugar, and milk powder and/or cocoa powder where present. Higher solids content, e.g. of milk powder, therefore negatively effects the good texture and sensorial properties of fat-based filling.

There is a desire to provide milk fillings with improved nutritional profile, particularly higher content in milk solids and reduced fat and SFA content.

In an alternative approach, confectionery products have been proposed based on powder sintering techniques to produce porous confectionery products. Such powder sintering processes for confectionery are discussed for example in EP1769682, US4394395 and EP1768502. Confectionery products produced using this approach can have a higher content in particulate ingredients, e.g. milk powder, and have a lower fat content than conventional fat-based fillings. As an example, the Nestle Carlos V Milki bar has a high milk content (44% w/w) and particularly has a considerably higher content in non-fat milk solids (around 30% w/w) compared to confectionery products with conventional fat-based milk fillings. However, the sintered particle structure tends to give such products a dry mouthfeel and nonpreferential texture due to the disintegration of the loosely sintered particles as the solid particles absorb saliva upon eating, and due to the absence of the fat phase. Furthermore, confectionery products comprising agglomerated oil powder together with low amounts of milk powder which are made by extrusion are disclosed WO 2012/089691, published on 05.07.2012. Food compositions such as tablet candy including oil powders as lubricants, however no milk powders, are known from JP2002188095. Accordingly there remains a need for confectionery products with improved nutritional profile, particularly higher content in milk solids and reduced SFA content, whilst maintaining good texture and organoleptic properties.

It is an object of the invention to overcome or ameliorate at least one of the disadvantages of the prior art, or to provide a useful alternative. In particular, it is desirable to provide confectionery products that have a high milk content, a low SFA content, without compromising the organoleptic parameters.

It would be advantageous to provide confectionery products that provide a pleasant consumption experience to the consumer, and that may be easily industrialised at a reasonable cost.

### SUMMARY OF THE INVENTION

In one aspect there is provided a confectionery product comprising agglomerated granulated powder ingredients including an oil powder and a milk powder, as defined in claim 1. The oil powder comprises at least 40% w/w oil in an inner core and an encapsulating outer shell comprising a cross-linked emulsifier.

The confectionery products of the invention have a firm texture, and have a stable shape. The confectionery products advantageously have a creamy and pleasant mouthfeel. The present invention makes it possible to provide confectionery products with good texture and organoleptic properties, with high milk content and which are low in SFA.

In another aspect the invention relates to a process for preparing a confectionery product according to the present invention, comprising:
- providing an oil powder, wherein said oil powder comprises an inner core comprising an oil and an outer shell comprising a cross-linked emulsifier, and wherein the oil powder comprises at least 40% w/w oil;
- mixing the oil powder with the milk powder and other powder ingredients and any optional non-powder ingredient(s);
- mechanically agitating the mixture of ingredients to form a granulate, and
- compacting or shaping the obtained granulate by pressure agglomeration; to form a solid confectionery mass; and,
- optionally applying a coating to the thus obtained solid confectionery mass.

The compacting or shaping of the granulated powder ingredients is carried out by a pressure agglomeration technique, advantageously by an extrusion process or a powder compaction technique.

In a further aspect there is provided the use of an oil powder for the preparation of a solid confectionery product as defined in claim 11, wherein the oil powder is granulated together with other powder ingredients of the confectionery product and then pressure agglomerated to produce the solid confectionery product.

These and other aspects, features and advantages of the invention will become more apparent to those skilled in the art from the detailed description of embodiments of the invention.

### DETAILED DESCRIPTION OF THE INVENTION

The inventors of the present invention have surprisingly found that confectionery products with high milk content and good organoleptic properties such as a smooth texture and indulgent mouthfeel can be manufactured by pressure agglomeration of granulated powder ingredients including an oil powder.

The oil powder comprises an inner core comprising a liquid oil encapsulated in an outer shell comprising a cross-linked emulsifier.

Any type of known oil powder that is solid at room temperature is contemplated given that the oil content is high enough to provide the desired creamy and pleasant mouthfeel. The liquid oil content of the oil powder is at least 40% w/w, such as from 40 to 99. 5% w/w. Preferably the oil powder comprises at least 60% w/w, such from 60 to 99.5% w/w, more preferably at least 70% w/w, such from 70 to 99.5% w/w more preferably at least 80% w/w, such from 80 to 99.5% w/w more preferably at least 90 % w/w oil, such as at least 95% w/w, or even at least 99% w/w oil. For instance, in one preferred embodiment the oil powder contains from 90% to 99.5% w/w oil, preferably from 90% to 99% w/w oil. Above 99.5% w/w oil content the oil powder can start to lose its solid state properties.

The oil powder can be obtained by known emulsion-based encapsulation processes. These processes have in common that they are based on an oil-in-water emulsion that is dried to obtain an oil powder. The drying step can be carried out by any commonly known drying technique such as air drying, ventilation, spray drying, vacuum drying, freeze drying, etc. Prior to the drying step a step to crosslink the emulsifier can be included. Suitably this may be effected by a heat treatment, a chemical treatment or an enzymatic treatment to crosslink the used emulsifier, e.g. milk proteins. The final oil powder usually consists of a liquid vegetable oil that is encapsulated in a matrix material consisting of proteins, carbohydrates, or other surface active agents, or mixtures thereof.

The oil used for preparing the emulsion can be any vegetable oil or fat that is liquid or that can be liquefied at ambient conditions. The oil can comprise mineral oils and/or organic oils (oils produced by plants or animals), in particular food grade oils. Examples include sunflower oil, rapeseed oil, olive oil, soy oil, fish oil, linseed oil, safflower oil, corn oil, algae oil, cottonseed oil, grape seed oil, nut oils such as hazelnut oil, walnut oil, rice bran oil, sesame oil, peanut oil, palm oil, palm kernel oil, coconut oil, or combinations thereof. Optionally, the oil can contain one or more liposoluble compound; such as for example plant polyphenols, fatty acids, such as n-3 fatty acids, n-6 fatty acids, vitamins, aromas, antioxidants, other active ingredients. Preferably, an oil with a low SFA content is chosen such as high oleic sunflower oil or high oleic rapeseed oil.

The emulsifier may be a protein, carbohydrate, other surface active agent, or mixtures thereof. Preferably the emulsifier used is a protein-based emulsifier. The protein that is used to encapsulate the oil to produce the oil powder can be any food-grade protein such as milk and/or whey proteins, soy proteins, pea proteins, caseinate, egg albumen, lyzozyme, gluten, rice protein, corn protein, potato protein, pea protein, skimmed milk proteins or any kind of globular and random coil proteins as well as combinations thereof. In one preferred embodiment the protein is one or more milk and/or whey derived protein.

Preferred milk proteins or milk protein fractions in accordance with the present invention comprise, for example, whey proteins, α-lactalbumin, β-lactalbumin, bovine serum albumin, acid casein, caseinates, α-casein, α-casein.

As far as whey proteins are concerned, the protein source may be based on acid whey or sweet whey or mixtures thereof and may include α-lactalbumin and β-lactalbumin in any proportions. The proteins may be intact or at least partially hydrolysed.

Typically the oil powder comprises at least 0.5% w/w and up to about 30% w/w, preferably up to about 20% w/w, more preferably up to about 10% w/w of the encapsulating protein. In one preferred embodiment the oil powder comprises from about 0.5% w/w to about 5% w/w protein, such as from about 0.5% w/w to about 4% w/w protein. In some embodiments embodiment the oil powder comprises a maximum of 1 % w/w of the protein.

The single particles of oil powder according to the invention typically have an average particle diameter in the range of form about 0.1 to 100 µm, for example about 1 to 50 µm.

The proteins may optionally comprise food grade salts, such as sodium citrate, magnesium citrate, potassium citrate or combinations thereof. Such salts may be present in an amount typically up to 10% w/w, preferably from 0 to 5% w/w.

Emulsion based processes to obtain oil powders are known and suitable oil powders are commercially available. Suitable such oil powders can be prepared according to known processes, for instance, such as described in EP 1 998 627, WO2010/057852, WO2008/066380.

According to one embodiment the oil powder may be prepared by an emulsion based process, comprising preparing an emulsion of the oil, the emulsifier (preferably a protein), and optionally a food grade salt and/or a liposoluble compound; crosslinking the protein, for example by heating, UV-radiation, chemically or enzymatically; spray-drying the emulsion to generate the oil powder. According to one embodiment an oil powder as described in WO2010/057852 is used.

The solid confectionery product according to the invention may typically comprise about 5% to 70% w/w, preferably from about 5 to 60% w/w, preferably from about 5 to 50% w/w, such as from about 10 to 50% w/w, of the oil powder.

Fat based solid confectionery products typically comprise from about 5 to 70 % (w/w) solid fats, typically from about 15 to 55 % (w/w), such as from about 20 - 50 % (w/w) solid fats.

Typical solid fats include coconut oil, palm kernel oil, palm oil, cocoa butter, butter oil, lard, tallow, oil / fat fractions such as lauric or stearic fractions, hydrogenated oils, and blends thereof.

In the preparation of the confectionery product of the present invention oil powders are used partially or totally in place of the usual partially solid fats used in the preparation of solid fat-based confectionery products. Typical solid fat replacement ratios are from about 1% to 100%, preferably from about 15% to 100%, preferably from about 15% to 100%, more preferably about 15 - 75 %, more preferably about 25 - 60 %. Preferred replacement ratios depend amongst others on the desired texture and other organoleptic properties of the confectionery product. Higher replacement ratios can in some cases lead to products with a more sticky texture. At very high, near 100%, replacement ratios there can be a degree of leakage of the oil from the oil powder less desirable for certain applications.

One beneficial feature of the present invention is the flexibility of the approach in terms of ingredients. The present invention is not related to particular fat fractions or crystallizing agents. In the present invention any type of oil with a desired degree of saturation can be used. In doing so, a reduction in SFA content of up to about 80% compared to a confectionery product based on conventional solid fats can be obtained, for instance, fat-based confectionery products with a SFA content as low as that of a high oleic sunflower oil (about 8 % w/w SFA) can be obtained. The confectionery products of the invention have a high content in milk solids. The confectionery product comprises from about 10 to 80 % w/w, preferably from about 20 to 70% w/w, even more preferably from about 25% to about 70% w/w, such as from about 30 to 70 % w/w, preferably from about 40 to 65 % w/w milk powder. Any powder milk ingredient is contemplated, including skimmed milk powder, semi-skimmed milk powder, full-fat milk powder. The fat content of the milk powder is not important for the method of the invention. Typically milk powders have fat content in the range of from 0 to 30% w/w. Non-fat or low-fat (e.g. fat content less than 5% w/w) may be preferred for some embodiments to reduce total fat content. The milk powder may be produced by any conventional methods, for example spray-dried milk powder, roller-dried milk powder.

The confectionery products of the invention make it possible to achieve high content in non-fat milk solids of at least 30% w/w, even over 35% w/w, and even over 40% w/w can be achieved. In some preferred embodiments the confectionery products may have a non-fat milk solids content of from about 30% to about 45%.

Preferably the other powder ingredients of the confectionery product according to the invention include a sugar and/or cocoa powder.

Any sugar or sugar substitute may be contemplated. Typical suitable sugars include sucrose, dextrose, fructose and lactose, preferably sucrose.

In some embodiments the confectionery product comprises an amount of sugar of about 5 to 70 % w/w, preferably from about 5 to 50% w/w, such as from about 5 to 40 % w/w, such as from about 10 to 30 % w/w sugar.

In some embodiments the confectionery product contains cocoa powder in an amount from 1 to 80% w/w, preferably from about 5 to 70% w/w, such as from about 5 to 50% w/w, from about 5 to 40% w/w, from about 10 to 30% w/w, for instance around 10 to 20% w/w cocoa powder.

The confectionery product according to the invention may comprise other common ingredients of a fat-based confectionery, such as, for example, solid fats, chocolate, whey powder, fruit acids, natural or synthetic flavors, natural or artificial colors, starch based fillers, fibres, nut powders, inclusions such as small pieces of nuts, dried fruits, sugar confectionery for example, emulsifiers such as lecithin, flow aids such as starches.

According to some embodiments a confectionery product according to the invention may comprise from 0 to 65% w/w of a solid fat, from about 5 to 70% w/w of oil powder, and from about 10 to 70% w/w of milk powder.

According to some embodiments a confectionery product according to the invention may further comprise from about 5 to 70% w/w of sugar.

The present invention further provides a process for the preparation of the confectionery products of the present invention. Said process involves granulation of the oil powder ingredient along with milk powder, and optionally other particulate ingredients, followed by the pressure agglomeration of the granulated ingredient mixture, optionally along with other ingredients of the solid confectionery product mass (such as inclusions, liquid ingredients, and/or additional particulate ingredients, where present).

Accordingly, in one aspect the invention relates to a process for preparing a confectionery product according to the present invention, comprising:
- providing an oil powder, wherein said oil powder comprises an inner core comprising an oil and an outer shell comprising a cross-linked emulsifier, and wherein the oil powder comprises at least 40% w/w oil;
- mixing the oil powder with milk powder and other powder ingredients, and optionally non-powder ingredient(s);
- mechanically agitating the mixture of ingredients to form a granulate, and
- compacting or shaping the obtained granulate, optionally together with other ingredients, by pressure agglomeration; to form a solid confectionery mass; and,
- optionally applying a coating to the thus obtained solid confectionery mass.

The granulation step may be carried out on conventional mixing/kneading apparatus, such as a low-shear kneader or a conch, and is preferably carried out at a low shear. For instance at an apparent shear rate of no more than 1000s⁻¹, for instance in the range 1 to 1000s⁻¹.

During the mixing or kneading some oil is released from the oil powder, which thereby induces granulation of the powder ingredients. The size of the granules obtained can easily be controlled by adjusting mixing time and/or shear rate. For example, in some embodiments the thus produced granules may typically have a median size of from about 500µm to about 5mm.

Advantagously the granulated material obtained has good flow properties, making processing of the granulated material easy. Whereas the mixture of powder ingredients without granulation is cohesive and does not flow easily making dosing or otherwise pouring of the powder mixture difficult. Optionally, flowability can be further optimized by the addition of small amounts of known flow agents, such as starches.

Advantageously the process of the invention, comprising the granulation step, makes it possible to achieve a more indulgent, melt-in-mouth, mouth feel and stable structure of the final pressure agglomerated confectionery product, compared to products prepared by a corresponding process without the granulation step.

Optionally other ingredients of the confectionery product, including liquid ingredients, can be mixed with the granulated material prior to the pressure agglomeration step.

The term pressure agglomeration refers to the application of pressure in order to cause agglomeration of the particles of the powder ingredients (otherwise referred to as primary particles). Without wishing to be bound by any particular theory it is understood that the application of significant pressure on the powder matrix leads to the formation of interlocking between the primary particles and liquid bridges by the oil, and is accompanied by a growing contact number, decreased porosity and particle breakage, thereby contributing to the formation of agglomerates.

The compacting or shaping of the granulated powder ingredients is carried out by a pressure agglomeration technique. Pressure agglomeration processes/techniques refer to techniques in which primary particles are exposed to a significant pressure in order to form agglomerates. Typical pressure agglomeration processes include extrusion, roller compaction and tableting process.

The process of the invention is not limited to any particular pressure agglomeration technique, and any known pressure agglomeration technique is contemplated. Suitably the compacting or shaping of the granulated powder ingredients is carried out by an extrusion process or a powder compaction technique, such as roller compaction or tabletting / mould-punch processes.

Conventional extrusion, roller compaction or tabletting techniques can be applied and are well-known in the field.

Extrusion of powder masses is typically applied for the agglomeration of food additives and various other food powders like instant beverages, cereals or snack products. Generally extrusion processes involve pressing an ingredient mix through a perforated die in an extruder by a piston or an agitator. Also screw extruders exist, in which a screw transports the product that is subsequently forced through a die with a defined shape. Interparticle friction in the die entry region and wall friction in the die lead to a pressure build-up which ensures the formation of stable agglomerates.

Generally, roller compaction techniques generate irregularly shaped compacts of relatively high density, and roller compaction is commonly used for the agglomeration of high molecular carbohydrates or e.g. seasoning powders. In a typical roller-compaction process two counter-rotating rollers put high pressure on a continuous powder stream moving through the gap between them. An adjustment of the applied pressure is possible by changing the gap width between the rollers or variation of the feeding rate. After the compaction, the ribbons obtained from the initial powder may be first ground, e.g. by toothed crushers, and the agglomerates with the desired size can then be obtained from a subsequent sieving process.

Tableting processes are generally used for the production of seasoning and confectionery tablets in different sizes and shapes. Food powders can be compacted directly or after an additional agglomeration step, which facilitates the compaction process and enhances the flowability of the powder. The actual tableting process generally involves the filling of a constant mass of powder into dies, followed by precompressing it for at least partial air release as well as particle rearrangement and a final pressure or distance controlled compression leading to particle breakage and deformation. After the pressure is released, the tablets re-expand elastically and are released by ejection. Conventional devices for tableting in the food industry include eccentric tablet presses or more commonly used rotary tablet presses, such as double-punch type rotary presses.

In a preferred embodiment the pressure agglomeration is carried out by an extrusion process or a tabletting / mould press process. Advantageously these techniques are simple, cost effective, and easily applied on an industrial scale.

Advantageously the present invention provides an easier route to making solid confectionery products, such as praline type products, than the conventional processes based on liquid methods, which involve a number of steps involving heating (e.g. using heating tanks), moulding, cooling, de-moulding.

The confectionery product obtained by the pressure agglomeration of the granulated ingredients has a porous wet powder structure, which contributes to a firm texture with a stable shape and pleasant melting mouthfeel upon consumption.

The shape and other physical properties, such as density, porosity, hardness, of the produced confectionery product can be adjusted dependent on the process used.

For example, in the case of tableting, pre-dosed quantities can be pressed into distinctive shapes with defined dimensions, defined by the shape of the mould. The resulting confectionery products have low density due to entrapped air. The resultant confectionery products can have a very firm or hard texture and have a highly stable shape, with a high resistance to deformation. The produced confectionery products are particularly easy to handle and pack.

For instance extrusion processes can be advantageous for the preparation of bar, stick or pillow type shaped products. In extrusion processes it is possible to include some ingredients in non-powder form, such as liquid ingredients. For instance a liquid oil may be added in the extruder, or a fat which is semi-solid or solid at room temperature can be added to the extruder after heating to liquefy the fat. The addition of other fats in this way can allow the formation of more malleable products.

The pressure agglomeration of the powder ingredients including the used oil powder confers a stable shape and firm or hard texture to the confectionery product. Upon mechanical stress in the mouth and upon contact with the saliva the oil powder releases its oil in the mouth, thereby imitating a melting event.

Optionally the solid confectionery product mass, produced by the pressure agglomeration, may be coated, with a confectionery coating, preferably sugar-based coating or a fat-based coating (such as, chocolate, a chocolate compound or chocolate flavoured coating or other fat-based coating). Any known confectionery coating is contemplated. Conventional coatings techniques can be used to apply the coating to the confectionery product. Advantageously, the good shape stability of the products of the invention make it easy to apply a coating using conventional techniques.

The confectionery products of the invention have a firm texture, and have a stable shape, with defined dimensions. Advantageously confectionery products of the invention are resistant to substantial deformation on handling, and are easy to handle and pack. Advantageously confectionery products of the invention exhibit good shape retention properties on exposure to heat. For example confectionery products according to the invention can retain their shape on exposure to heat above room temperature, above warm temperatures such as 30°C. Confectionery products according to the invention can retain their shape on heating to 40°C, and even on heating up to 60°C.

The confectionery products of the invention advantageously have a smooth, creamy and pleasant mouthfeel.

The confectionery products of the invention advantageously have a high porosity, which allows the provision of confectionery products having a lower total fat content per volume, compared to conventional fat-based confectionery products such as praliné type confections, and contributes to providing a smooth, light texture in the mouth on consumption.

The present invention makes it possible to provide confectionery products that have high milk content and high non-fat milk solids content, and are low in SFA, whilst having good shape retention and having creamy, indulgent organoleptic properties.

As used in the specification, the words "comprise", "comprising" and the like are to be construed in an inclusive sense as opposed to an exclusive or exhaustive sense; that is to say, in the sense of "including, but not limited to".

As used in the specification, the word "about" should be understood to apply to each bound in a range of numerals. Moreover, all numerical ranges should be understood to include each whole integer within the range.

As used in the specification, the singular forms "a", "an", and "the" include plural referents unless the context clearly dictates otherwise.

As used in the specification, the term "substantially free" means that no more than about 10 weight percent, preferably no more than about 5 weight percent, and more preferably no more than about 1 weight percent of the excluded material is present. In a preferred embodiment, "substantially free" means that no more than about 0.1 weight percent of the excluded material remains. "Entirely free" typically means that at most only trace amount of the excluded material is present, and preferably, no detectable amount is present. Conversely, "substantially all" typically means that at least about 90 weight percent, preferably at least about 95 weight percent, and more preferably at least about 99 weight percent of the material is present.

Unless noted otherwise, all percentages in the specification refer to weight percent, where applicable.

Unless defined otherwise, all technical and scientific terms have and should be given the same meaning as commonly understood by one of ordinary skill in the art to which this invention belongs.

It should be noted that embodiments and features described in the context of one of the aspects or embodiments of the present invention also apply to the other aspects of the invention.

The invention will now be described in further details in the following nonlimiting examples.

### EXAMPLES

### Example 1

### Example 1 - Preparation of an oil powder

An oil powder was prepared according to WO2010/057852.

### (i) Emulsion preparation:

Sunflower oil was emulsified in an aqueous solution of WPI (whey protein isolate, 1 % (w/w) or 3% (w/w)). The final emulsion contained 20 % (w/w) of sunflower oil. The emulsification was carried out with a high pressure homogenizer. The parameters were adapted to reach an oil droplet size between 0.5 microns and 5 microns.

### (ii) Thermal crosslinking:

The emulsion was heat treated at 80 °C for 10 min to achieve a cross-linking of the protein layer which surrounds the oil droplets in the emulsion. The crosslinked emulsion was subsequently cooled to ambient temperature.

### (iii) Spray Drying Process:

The emulsion was spray dried in a Niro SD-6.3-N pilot plant spray dryer. The following parameters were used: atomization by a spraying disc, throughput 10 l/h, inlet temperature 105°C, outlet temperature 65°C. The obtained oil powders had a moisture content of less than 0.5% (w/w).

### Example 2 - Preparation of a confectionery product

Two recipes were prepared using the oil powder according to Example 1 (amounts given as % w/w) :
1.

| | |
|---|---|
| Oil powder | 20.0% |
| Spray-dried whole milk powder (26% fat) | 50.0% |
| Sugar | 22.8% |
| Palm kernel oil | 7.0% |
| Soy Lecithin | 0.2% |

2.

| | |
|---|---|
| Oil powder | 18.0% |
| Spray-dried whole milk powder (26% fat) | 50.0% |
| Sugar | 10.0% |
| Apple Paste | 12.5% |
| Glycerol | 9.3% |
| Soy Lecithin | 0.2% |

The powder ingredients were mixed together and kneaded in a Stefan Mixer equipped with a surface scraper and a shear blade (10 minutes mixing/kneading time) at 1500 rpm to produce granulated material.

Confectionery products were then prepared by pressure agglomeration of the granulated ingredients by (i) tabletting; and (ii) extrusion.

### (i) Preparation of Confectionery Product by Tabletting.

The granulated mixture according to each recipe was filled into the mould of a manual tablet press (7 g of mixture per mould, the punch had a rectangular shape with the dimensions 30 mm x 23.5 mm) and compacted with the manual press at a compacting force of 2000 N.

A proportion of the manually compacted samples were coated with milk chocolate after de-moulding.

The porosity of the manually compacted samples (recipe 1) was measured as 10% (porosity measured by X-ray tomography (ScancoMedical)).

The samples were observed to have a firm texture and to retain their shape on handling. The samples were observed to maintain their shape on heating to 50°C.

When eaten the samples all gave a smooth, creamy, melt in mouth mouth feel and a good milky taste.

### (ii) Preparation of Confectionery Product by extrusion:

The granulated mixture according to each recipe was extruded in a Clextral Evolum EV25 co-rotating twin screw extruder. Extrusion was carried out under the following conditions: mass flow rate 10 kg/h, rotational speed of the screws 80 rpm, outlet temperature 25°C??. A cylindrical die (12 mm diameter) was used,
The samples were observed to retain their shape on handling. The samples were observed to maintain their shape on heating to 50°C.

When eaten the samples had a soft texture and a creamy mouth feel and a good milky taste.

### Example 3 - Preparation of a confectionery product

A confectionery product containing chocolate was prepared according to the following recipe:

| | |
|---|---|
| Oil powder (of Example 1) | 22.0% |
| Spray-dried whole milk powder (26% fat) | 50.0% |
| Sugar | 16.0% |
| Milk chocolate | 12.0% |

The powder ingredients were mixed together and kneaded in a Stefan Mixer equipped with a surface scraper and a shear blade (10 minutes mixing/kneading time) at 1500 rpm to produce granulated material. The liquid milk chocolate (here molten milk chocolate mass was used, but any liquid chocolate is envisaged, e.g. tempered chocolate) was added to the granulated material with mixing and the confectionery products were then prepared by pressure agglomeration of the granulated ingredients by tabletting as described in Example 2 above.

The samples were observed to have a firm texture and to retain their shape on handling, and to have a creamy, melt in mouth, mouthfeel when eaten.

Although preferred embodiments have been disclosed in the description with reference to specific examples, it will be recognised that the invention is not limited to the preferred embodiments. Various modifications may become apparent to those of ordinary skill in the art and may be acquired from practice of the invention. It will be understood that the materials used and the chemical details may be slightly different or modified from the descriptions without departing from the methods and compositions disclosed and taught by the present invention.

## Claims

1. A solid confectionery product comprising pressure agglomerated granulated powder ingredients, said granulated powder ingredients including an oil powder and a milk powder, wherein said oil powder comprises an inner core comprising an oil and an outer shell comprising a cross-linked emulsifier, and wherein the oil powder comprises at least 40% w/w oil and wherein said product comprises 25% to 75% w/w milk powder, more preferably from 30% to 70% w/w milk powder.

2. A solid confectionery product according to the preceding claim wherein the oil powder comprises at least 90% w/w oil.

3. A solid confectionery product according to the preceding claim wherein the oil is selected from any element in the group consisting of olive oil, safflower oil, sunflower oil, fish oil, soy bean oil, soy oil, palm kernel oil, palm oil, coconut oil, flaxseed oil, rapeseed oil, primrose oil, linseed oil, corn oil, cottonseed oil, essential oils, animal oil, mineral oils, organic oil and combinations thereof, in particular food grade oils.

4. A solid confectionery product according to any one of the preceding claims wherein the cross-linked emulsifier is a cross-linked protein and where the protein comprises at least one food-grade such as whey protein, caseinate, egg albumen, lyzozyme, soy proteins, gluten, rice proteins, corn proteins, potato proteins, pea proteins, or any kind of globular and random coil proteins or combinations thereof.

5. A solid confectionery product according to any one of the preceding claims, wherein the oil powder has an average particle size in the range of about 0,1-100 µm.

6. A confectionery product according to claim 1 or 2 wherein the oil powder constitutes from 5% to 70% w/w, preferably from 5 to 60% w/w of the total ingredients.

7. A confectionery product according to any one of the preceding claims, comprising from 0 to 65% w/w of a solid fat, from 5 to 70% w/w of oil powder, and from 25 %to 75% w/w of milk powder.

8. A confectionery product according to any one of the preceding claims comprising from 50% to 70% milk powder.

9. A confectionery product according to any one of the preceding claims further comprising from 5 to 50% w/w of sugar.

10. A confectionery product according to any one of the preceding claims further comprising a coating.

11. Use of an oil powder for the preparation of a solid confectionery product comprising 25% to 75% w/w milk powder, more preferably from 30% to 70% w/ w milk power, wherein said oil powder comprises an inner core comprising an oil and an outer shell comprising a cross-linked emulsifier and wherein the oil powder comprises at least 40% w/w oil, and wherein the oil powder is granulated together with the milk powder and other powder ingredients of the confectionery product and then pressure agglomerated to produce the solid confectionery product.

12. Use according to claim 13 wherein the powder ingredients comprise sugar.

13. A process for the preparation of a solid confectionery product according to any one of the preceding claims 1-10, comprising the steps of;
(a) providing an oil powder, wherein said oil powder comprises an inner core comprising an oil and an outer shell comprising a cross-linked emulsifier, and wherein the oil powder comprises at least 40% w/w oil;
(b) mixing the oil powder with the milk powder and other powder ingredients, and any optional non-powder ingredient(s);
(c) mechanically agitating the mixture of ingredients to form a granulate, and
(d) compacting or shaping the obtained granulate by pressure agglomeration; to form a solid confectionery mass.

14. A process according to claim 15 wherein the granulation step (a) is carried out at low shear.

15. A process according to claim 15 or 16 wherein the pressure agglomeration is carried out by a powder compaction technique, such as tabletting or punch-moulding or by an extrusion process.

## Patentansprüche

1. Festes Süßwarenprodukt, umfassend druckagglomerierte granulierte Inhaltsstoffe in Pulverform, wobei die granulierten Inhaltsstoffe in Pulverform ein Ölpulver und ein Milchpulver einschließen, wobei das Ölpulver einen inneren Kern umfasst, der ein Öl und eine äußere Hülle umfasst, die einen vernetzten Emulgator umfasst, und wobei das Ölpulver mindestens 40 Gew.-% Öl umfasst und wobei das Produkt 25 bis 75 Gew.-% Milchpulver umfasst, mehr bevorzugt von 30 bis 70 Gew.-% Milchpulver.

2. Festes Süßwarenprodukt nach dem vorstehenden Anspruch, wobei das Ölpulver mindestens 90 Gew.-% Öl umfasst.

3. Festes Süßwarenprodukt nach dem vorstehenden Anspruch, wobei das Öl ausgewählt ist aus einem beliebigen Element der Gruppe bestehend aus Olivenöl, Distelöl, Sonnenblumenöl, Fischöl, Sojabohnenöl, Sojaöl, Palmkernöl, Palmöl, Kokosnussöl, Flachssamenöl, Rapssamenöl, Primelöl, Leinsamenöl, Maisöl, Baumwollsamenöl, essentiellen Ölen, tierischen Ölen, mineralischen Ölen, organischen Ölen und Kombinationen davon, insbesondere Ölen in Lebensmittelqualität.

4. Festes Süßwarenprodukt nach einem der vorstehenden Ansprüche, wobei der vernetzte Emulgator ein vernetztes Protein ist und wobei das Protein mindestens ein Element in Lebensmittelqualität enthält, wie z. B. Molkenprotein, Kaseinat, Eiklar, Lyzozym, Sojaproteine, Gluten, Reisproteine, Maisproteine, Kartoffelproteine, Erbsenproteine oder jede beliebige Art von globulären oder Random-Coil-Proteinen oder Kombinationen davon.

5. Festes Süßwarenprodukt nach einem der vorstehenden Ansprüche, wobei das Ölpulver eine durchschnittliche Partikelgröße im Bereich von ca. 0,1 - 100 µm aufweist.

6. Süßwarenprodukt nach Anspruch 1 oder 2, wobei das Ölpulver von 5 bis 70 Gew.-%, vorzugsweise von 5 bis 60 Gew.-%, der gesamten Inhaltsstoffe ausmacht.

7. Süßwarenprodukt nach einem der vorstehenden Ansprüche, umfassend von 0 bis 65 Gew.-% eines festen Fetts, von 5 bis 70 Gew.-% Ölpulver und von 25 bis 75 Gew.-% Milchpulver.

8. Süßwarenprodukt nach einem der vorstehenden Ansprüche, umfassend von 50 % bis 70 % Milchpulver.

9. Süßwarenprodukt nach einem der vorstehenden Ansprüche, weiterhin umfassend von 5 bis 50 Gew.-% Zucker.

10. Süßwarenprodukt nach einem der vorstehenden Ansprüche, weiterhin umfassend eine Beschichtung.

11. Verwendung eines Ölpulvers für die Zubereitung eines festen Süßwarenprodukts umfassend 25 bis 75 Gew.-% Milchpulver, mehr bevorzugt von 30 bis 70 Gew.-% Milchpulver, wobei das Ölpulver einen inneren Kern umfasst, der ein Öl umfasst, und eine äußere Hülle, die einen vernetzten Emulgator umfasst, und wobei das Ölpulver mindestens 40 Gew.-% Öl umfasst, und wobei das Ölpulver zusammen mit dem Milchpulver und anderen pulverförmigen Inhaltsstoffen des Süßwarenprodukts granuliert und dann druckagglomeriert ist, um das feste Süßwarenprodukt zu ergeben.

12. Verwendung nach Anspruch 13, wobei die Inhaltsstoffe des Pulvers Zucker umfassen.

13. Verfahren für die Zubereitung eines festen Süßwarenprodukts nach einem der vorstehenden Ansprüche 1 - 10, folgende Schritte umfassend;
(a) Bereitstellen eines Ölpulvers, wobei das Ölpulver einen inneren Kern, der ein Öl umfasst, und eine äußere Hülle, die einen vernetzten Emulgator umfasst, umfasst, und wobei das Ölpulver mindestens 40 Gew.-% Öl umfasst;
(b) Mischen des Ölpulvers mit dem Milchpulver und anderen Inhaltsstoffen in Pulverform, und einem optionalen nicht pulverförmigen Inhaltsstoff bzw. optionalen nicht pulverförmigen Inhaltsstoffen;
(c) mechanisches Rühren des Gemischs von Inhaltsstoffen, um ein Granulat zu bilden, und
(d) Verdichten oder Formen des erhaltenen Granulats durch Druckagglomeration; um eine feste Süßwarenmasse zu bilden.

14. Verfahren nach Anspruch 15, wobei der Granulierungsschritt (a) bei geringer Scherbelastung ausgeführt wird.

15. Verfahren nach Anspruch 15 oder 16, wobei die Druckagglomeration durch eine Pulververdichtungstechnik wie z.B. Tablettenpressen oder Stempel-Formgebung oder mittels eines Extrusionsverfahrens ausgeführt wird.

## Revendications

1. Produit de confiserie solide, comprenant des ingrédients en poudre granulée agglomérée sous pression, lesdits ingrédients en poudre granulée comprenant une poudre d'huile et du lait en poudre, dans lequel ladite poudre d'huile comprend un noyau interne comprenant une huile et une enveloppe externe comprenant un émulsifiant réticulé et dans lequel la poudre d'huile comprend au moins 40 % en poids d'huile et dans lequel ledit produit comprend de 25 % à 75 % en poids de lait en poudre, plus préférablement de 30 % à 70 % en poids de lait en poudre.

2. Produit de confiserie solide selon la revendication précédente, dans lequel la poudre d'huile comprend au moins 90 % en poids d'huile.

3. Produit de confiserie solide selon la revendication précédente, dans lequel l'huile est sélectionnée parmi n'importe quel élément dans le groupe constitué d'huile d'olive, d'huile de carthame, d'huile de tournesol, d'huile de poisson, d'huile de graine de soja, d'huile de soja, d'huile de palmiste, d'huile de palme, d'huile de noix de coco, d'huile de graine de lin, d'huile de colza, d'huile de primevère, d'huile de lin, d'huile de maïs, d'huile de graine de coton, d'huiles essentielles, d'huile animale, d'huiles minérales, d'huile organique et de leurs combinaisons, en particulier des huiles de qualité alimentaire.

4. Produit de confiserie solide selon l'une quelconque des revendications précédentes, dans lequel l'émulsifiant réticulé est une protéine réticulée et dans lequel la protéine comprend au moins une protéine de qualité alimentaire telle qu'une protéine de blé, du caséinate, de l'albumine d'oeuf, du lysozyme, des protéines de soja, du gluten, des protéines de riz, des protéines de maïs, des protéines de pomme de terre, des protéines de pois ou n'importe quel type de protéines en spirales globulaires et aléatoires ou leurs combinaisons.

5. Produit de confiserie solide selon l'une quelconque des revendications précédentes, dans lequel la poudre d'huile a une taille de particule moyenne dans la plage d'environ 0,1 à 100 µm.

6. Produit de confiserie selon la revendication 1 ou 2, dans lequel la poudre d'huile constitue de 5 % à 70 % en poids, de préférence de 5 % à 60 % en poids des ingrédients totaux.

7. Produit de confiserie selon l'une quelconque des revendications précédentes, comprenant de 0 à 65 % en poids d'une matière grasse solide, de 5 à 70 % en poids de poudre d'huile et de 25 % à 75 % en poids de lait en poudre.

8. Produit de confiserie selon l'une quelconque des revendications précédentes, comprenant de 50 % à 70 % de lait en poudre.

9. Produit de confiserie selon l'une quelconque des revendications précédentes, comprenant en outre de 5 à 50 % en poids de sucre.

10. Produit de confiserie selon l'une quelconque des revendications précédentes, comprenant en outre un enrobage.

11. Utilisation d'une poudre d'huile pour la préparation d'un produit de confiserie solide comprenant de 25 % à 75 % en poids de lait en poudre, plus préférablement de 30 % à 70 % en poids de lait en poudre, dans laquelle ladite poudre d'huile comprend un noyau interne comprenant une huile et une enveloppe externe comprenant un émulsifiant réticulé et dans laquelle la poudre d'huile comprend au moins 40 % en poids d'huile et dans laquelle la poudre d'huile est granulée conjointement avec le lait en poudre et d'autres ingrédients en poudre du produit de confiserie puis agglomérée sous pression pour produire le produit de confiserie solide.

12. Utilisation selon la revendication 13, dans laquelle les ingrédients en poudre comprennent du sucre.

13. Procédé de préparation d'un produit de confiserie solide selon l'une quelconque des revendications précédentes 1 à 10, comprenant les étapes consistant à ;
(a) fournir une poudre d'huile, dans lequel ladite poudre d'huile comprend un noyau interne comprenant une huile et une enveloppe externe comprenant un émulsifiant réticulé et où la poudre d'huile comprend au moins 40 % en poids d'huile ;
(b) mélanger la poudre d'huile avec le lait en poudre et les autres ingrédients en poudre et tout autre ingrédient non en poudre supplémentaire ;
(c) agiter mécaniquement le mélange d'ingrédients pour former un granulé et
(d) compacter ou façonner le granulé obtenu par agglomération sous pression ; pour former une masse de confiserie solide.

14. Procédé selon la revendication 15, dans lequel l'étape de granulation (a) est réalisée avec un faible cisaillement.

15. Procédé selon la revendication 15 ou 16, dans lequel l'agglomération sous pression est réalisée par une technique de compactage de poudre, telle qu'une compression en tablette, un moulage par poinçonnage ou par un procédé d'extrusion.
